# EUROPEAN PATENT APPLICATION

(11) **EP 4 641 404 A1**
(43) Date of publication of application: **29.10.2025**
(21) Application number: 25171461.4
(22) Date of filing: 18.04.2025
(51) Int. Cl.: G06F 16/3329, G06F 40/30, G06N 3/045, G06N 3/084

(54) **FRAMEWORK FOR STRUCTURED PROMPT BUILDING FOR A GENERATIVE LANGUAGE MODEL**

(30) Priority: 25.04.2024 US 202418645757
(71) Applicant: Microsoft Technology Licensing, LLC, Redmond, WA 98052-6399 (US)
(72) Inventor: BADJATIYA, Pinkesh, Redmond, 98052-6399 (US); GULATI, Aditi, Redmond, 98052-6399 (US); CHAMUA, Kishor, Redmond, 98052-6399 (US); KULHARI, Rajpal, Redmond, 98052-6399 (US); AGRAHARI, Aditi, Redmond, 98052-6399 (US); CHISHI, Thuli Nitoshe, Redmond, 98052-6399 (US); BAJI, Harendra Prasad, Redmond, 98052-6399 (US)
(74) Representative: Murgitroyd & Company

(57) **Abstract**

Described herein are systems and methods for enhancing user interaction with Large Language Models (LLMs) through structured prompt generation. A computer-implemented method and system for dynamically creating and refining user prompts based on user input, contextual data, and a hierarchical intent recommendation process are described. A structured prompt builder is provided, which guides users through the process of refining their initial query into a detailed prompt by presenting selectable intent indicators representing various facets or subtopics related to their query. The system includes an in-line word and phrase recommendation engine that suggests alternative words or phrases to refine the prompt further. The described techniques simplify the process of engaging with LLMs, democratizes access to advanced language model capabilities, and enhances the accuracy and relevance of LLM responses, thereby improving the overall search experience for users.

## Description

### TECHNICAL FIELD

The present disclosure relates to the technical fields of natural language processing (NLP) and user interface design, including techniques for interactive prompt generation and refinement for Large Language Models (LLMs). More specifically, the present disclosure relates to systems and methods for dynamically generating prompts for LLMs in a structured manner, based on user input and contextual data, facilitating enhanced user interaction with LLMs through a guided, hierarchical intent discovery process.

### BACKGROUND

Generative language models, and Large Language Models (LLMs) in particular, represent a significant advancement in natural language processing (NLP) technology, enabling machines to generate human-like text at an unprecedented scale and complexity. Unlike traditional rule-based systems, LLMs, such as the series of models based on the Generative Pre-trained Transformer (GPT) developed by OpenAI^{®}, are trained on massive amounts of text data using deep learning techniques. These models consist of multiple layers of neural networks and leverage vast datasets to "learn" intricate patterns and nuances of human language, enabling them to generate text that closely resembles natural human speech. This is achieved in part by training the model to predict the next word or token in a sequence based on the context provided by the preceding words or tokens. This approach, known as autoregressive language modeling, allows the model to capture long-range dependencies and semantic relationships within the text. Each layer of the neural network processes an input sequence, extracting abstract features that inform the model's predictions. By iteratively refining its predictions through backpropagation, the model learns to generate coherent and contextually appropriate text, effectively mimicking human language generation processes. This mechanism enables the model to produce text that is grammatically correct, semantically meaningful, and contextually relevant, making it well-suited for a wide range of natural language processing tasks.

### BRIEF DESCRIPTION OF THE DRAWINGS

Embodiments of the subject matter described herein are illustrated by way of example and not limitation in the figures of the accompanying drawings, in which:
FIG. 1 is a diagram illustrating an example of a computer-based system that includes a structured prompt builder for generating, in an interactive manner, a prompt for use as input with a language model system that is part of an artificial intelligence (AI) search assistant, consistent with some embodiments.
FIG. 2 is a diagram illustrating an example of a technique for generating and using a triggering module for use with a search engine, to trigger an AI-based search assistant experience, consistent with some embodiments.
FIG. 3 is a diagram illustrating a detailed view of an intent recommendation engine and intent generation model, which operate together as part of the structured prompt builder to generate a set of ranked and hierarchically organized search intent indicators, consistent with some embodiments.
FIG. 4 is a diagram illustrating an example of a set of ranked and hierarchically organized search intent indicators, generated by the intent recommendation engine for a user's query and for use with the structured prompt builder, consistent with some embodiments.
FIG. 5 is a diagram illustrating a detailed view of a prompt writer and a corresponding prompt writer model, which operate together as part of the structured prompt builder to generate or write a prompt for a user and for use as input to an AI-based search assistant, consistent with some embodiments.
FIG. 6 is a diagram illustrating a detailed view of an in-line word and phrase recommendation engine and corresponding model, for use in generating suggested alternative words and phrases for use in a prompt, consistent with some embodiments.
FIG. 7 is a flow diagram illustrating method operations performed as part of a method for generating a prompt, in an interactive manner, using a structured prompt builder, consistent with some embodiments.
FIG. 8 is a diagram illustrating an example search results interface or page, including a structured prompt builder user interface component, consistent with some embodiments.
FIG's. 9 and 10 illustrate example user interface diagrams for a prompt builder, showing how the prompt builder user interface component behaves as a user iteratively selects search intent indicators, consistent with some embodiments.
FIG. 11 is a diagram illustrating an example user interface for a structured prompt builder, showing the presentation of a list of alternative words or phrases for a phrase included in a prompt, consistent with some embodiments.
FIG. 12 is a diagram illustrating an example user interface for an AI-based search assistant that receives and processes a prompt generated with the structured prompt builder, consistent with some embodiments.
FIG. 13 is a block diagram illustrating a software architecture, which can be installed on any of a variety of computing devices to perform methods consistent with those described herein.

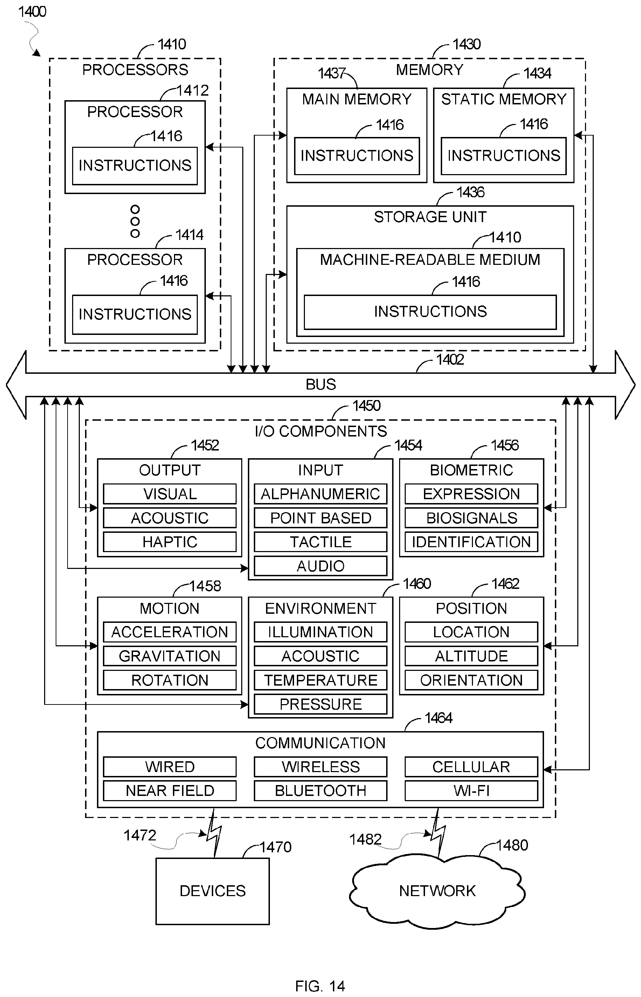

FIG. 14 is a diagrammatic representation of a machine in the form of a computer system (e.g., a server computer) within which a set of instructions may be executed for causing the machine to perform any one or more of the methodologies discussed herein, according to an example embodiment.

### DETAILED DESCRIPTION

Described herein are techniques for enhancing user interaction with Large Language Models (LLMs) through structured prompt generation. More specifically, the present disclosure describes systems and methods for dynamically creating and refining user prompts based on a combination of user input, contextual data, and a hierarchical intent recommendation process. In the following description, for purposes of explanation, numerous specific details and features are set forth in order to provide a thorough understanding of the various aspects of the subject matter described herein. It will be evident, however, to one skilled in the art, that the disclosed techniques may be practiced and/or implemented with varying combinations of the many details and features presented herein.

LLMs have emerged as powerful tools for answering queries that require a direct, synthesized response, as opposed to conventional search engines that typically return a list of documents, or links to documents, containing information relevant to the query. LLMs are particularly adept at processing natural language inputs and generating comprehensive answers that can encapsulate a wide range of information into a single, coherent narrative. This capability is especially beneficial for complex, open-ended questions or those that seek an explanation rather than mere facts. For instance, when a user asks an LLM a question like "What are the implications of quantum computing on data security?" the LLM can draw upon its extensive training across diverse datasets to provide a nuanced answer that addresses various aspects of the question, including the principles of quantum computing, its potential impact on encryption, and the broader implications for data security. In contrast, a conventional search engine would likely return a series of links to articles or papers on the subject, requiring the user to piece together the information themselves. The LLM's ability to directly answer questions in a conversational manner not only saves time but also makes information more accessible to users who may not have the expertise or inclination to conduct extensive research.

Despite the advanced capabilities of LLMs in providing direct answers, certain inherent characteristics of LLMs can render them less than ideal for some queries. A significant limitation is the training data cut-off date, which means that LLMs are trained on a dataset that only extends up to a certain point in time. Consequently, any events, developments, or information emerging after this cut-off date are not included in the LLM's knowledge base, making it unable to provide current information or insights on recent topics. For example, an LLM would not be able to provide the latest statistics on a recent global event or offer insights into a law passed after its last training update. This limitation is particularly problematic for time-sensitive queries that require the most up-to-date information. Additionally, LLMs may struggle with queries that require real-time data, such as stock prices or weather updates, as their training does not include a mechanism for real-time data retrieval. Other issues include biases present in the training data, which can skew the LLM's responses, and the potential for generating incorrect or nonsensical answers, particularly if a query falls outside the scope of the model's training dataset. These factors necessitate a more nuanced approach to leveraging LLMs for answering queries, especially when current or highly specific information is sought.

Retrieval-Augmented Generation (RAG) systems represent an innovative solution to the inherent limitations of standalone LLMs by integrating the capabilities of search engines with the generative prowess of LLMs. RAG-based LLM systems operate by first employing a retrieval component to search for and fetch relevant documents or data in real-time, thus ensuring access to the most current information available. This retrieval step helps to overcome the training data cut-off issue inherent in LLMs, as it allows a RAG-based LLM system to supplement the LLM's knowledge with up-to-date content, provided as context to the LLM, for example, as part of the prompt. Once the relevant information is retrieved, the generation component of the RAG system, typically an LLM, synthesizes the information into a coherent and contextually appropriate response. By combining the strengths of both search engines and LLMs, RAG-based systems can provide accurate and current answers to queries that require the latest data, while also maintaining the conversational and comprehensive answer format that LLMs are known for. This hybrid approach addresses the need for real-time data and mitigates the impact of any biases or gaps in the LLM's training dataset, ensuring that users receive responses that are both informative and reflective of the latest available information.

The process of generating a prompt for an LLM-based system, be it standalone or RAG-based, diverges significantly from the creation of a search query for a conventional search engine, owing to the distinct methodologies each system employs to process input. LLMs benefit from prompts that are not only articulated in complete sentences or questions but are also specific, detailed, and elaborate, providing a rich contextual framework that allows the LLM to interpret the input accurately and generate responses in a nuanced, conversational manner. The intricacies of language, including nuance, tone, and complexity, are best captured in detailed and specific prompts that guide or instruct the LLM to generate precise and elaborate answers. For instance, a well-structured prompt such as "Discuss the role of mitochondria in cellular respiration and energy production" enables the LLM to understand the depth and breadth of the information being requested. On the other hand, search engines are engineered to parse brief, keyword-focused queries, extracting relevant documents based on the presence of these keywords without the need for full sentences or contextual details. This fundamental difference in input processing underscores the divergent capabilities of LLMs and search engines: LLMs excel in generating narrative responses to linguistically rich prompts, while search engines are adept at rapidly retrieving information based on keyword matches.

When users initially engage with an LLM-based system, whether it is a standalone LLM, a RAG-based LLM system, or another type, there is a risk of disillusionment if the LLM system's output fails to meet their expectations. This issue often arises from improperly structured prompts; without the necessary specificity and detail, the LLM may produce responses that are vague or off-target. The problem is further compounded in scenarios where the LLM interface resembles that of a traditional search engine. Users accustomed to entering terse, keyword-driven queries may inadvertently apply the same approach to the LLM prompt. This mismatch between user input behavior and the LLM's processing capabilities can lead to a frustrating experience, as the nuanced and conversational responses that LLMs are capable of providing are best elicited through well-considered, fully formed prompts.

Users familiar with formulating queries for traditional search engines may encounter difficulties when transitioning to generating prompts for LLM-based systems. Accustomed to inputting concise, keyword-focused queries, these users might not appreciate the need for the more descriptive and specific, context-rich prompts that LLMs benefit from. This misunderstanding can lead to several issues. Firstly, it can result in the generation of responses from the LLM that are superficial or irrelevant, as the system lacks the necessary context to produce meaningful output. Secondly, it can cause user frustration, as the expectation of receiving comprehensive answers is unmet due to the inadequacy of the input prompt provided. Lastly, this disconnect can lead to underutilization of the LLM's capabilities, as users may not fully explore or benefit from the depth and breadth of knowledge that the LLM system can offer when engaged with appropriately crafted prompts.

The challenges associated with users generating effective prompts for LLMs manifest not only within search-based systems but also across a variety of interactive platforms where users seek information or assistance. In educational environments, for example, students may struggle to frame questions that elicit comprehensive explanations from an LLM, potentially hindering their learning experience. In the realm of customer service, consumers often face difficulty in articulating their support needs in a manner that an LLM can process effectively, leading to unsatisfactory interactions and resolutions. Similarly, in healthcare applications, patients may find it challenging to describe their symptoms in a way that allows an LLM to provide accurate health information or guidance. These issues are prevalent in both standalone LLMs and RAG-based systems, where the quality of the output is intrinsically tied to the user's ability to provide detailed, context-rich prompts. The necessity for well-constructed prompts becomes even more critical in RAG-based systems, as the retrieval component relies on precise prompts to fetch the most relevant and current data to inform the LLM's response. Without clear and specific user input, the system's ability to deliver accurate and helpful information is compromised, underscoring the importance of intuitive and guided prompt generation across various user interfaces and applications.

Consistent with some examples of the subject matter described herein, systems and methods are introduced to address the challenges of prompt generation for LLMs. The subject matter described herein involves techniques for assisting users in crafting detailed and contextually rich prompts that are optimized for LLM interaction. In one example, a system leverages a structured prompt builder that dynamically guides users through the process of refining their initial query into a well-formed prompt. This is achieved by presenting users with a series of selectable intent indicators that represent different facets or subtopics related to their query. As users select these intent indicators, the system intelligently incorporates them into the evolving prompt, ensuring that the final input to the LLM is both comprehensive and precise.

The techniques presented herein simplify the process of engaging with LLMs by automating the prompt refinement process. Users are no longer required to have an in-depth understanding of how to structure their queries for LLMs. Instead, they are supported by an intuitive interface that incrementally builds a detailed and specific prompt as they interact with the system. This user-friendly approach democratizes access to LLMs, making it easier for individuals from all backgrounds to benefit from the advanced capabilities of these models. Whether a user is seeking an in-depth explanation on a complex topic, or they need current information on a recent event, the system facilitates a seamless interaction with the LLM, leading to more satisfying and productive experiences.

Accordingly, techniques presented herein represent a significant advancement in the field of human-computer interaction, particularly in the context of LLMs and RAG-based LLM systems. By automating the creation of detailed prompts and providing a guided, interactive experience, the system empowers users to unlock the full potential of LLMs without requiring specialized knowledge or skills. This innovation not only enhances user satisfaction but also extends the reach of LLMs to a broader audience, ensuring that more people can take advantage of the rich, conversational responses that these models are capable of providing.

The techniques presented herein directly address the several challenges previously described by providing a bridge between the user's initial query and the sophisticated input required by LLMs for optimal performance. It does so by transforming a potentially ambiguous or under-specified user query into a detailed prompt that captures the full intent of the user's inquiry. This is accomplished through an interactive and iterative process, where the user is presented with a series of choices that progressively refine the search intent. The advantages of these techniques are manifold. Firstly, it significantly reduces the cognitive load on the user, as they no longer need to understand the intricacies of crafting LLM-friendly prompts. Secondly, it enhances the accuracy and relevance of the LLM's responses by ensuring that the prompts are rich in context and detail. Thirdly, it streamlines the user's search process, saving time and effort by quickly converging on the most pertinent information. Lastly, by facilitating more effective use of LLMs, the techniques broaden the scope of queries that can be satisfactorily answered, thereby expanding the utility and applicability of LLMs across various domains and user scenarios.

In some instances, the structured prompt builder also incorporates an alternative word and phrase recommendation process that allows users to further refine the user's prompt. This process identifies specific words or phrases within a generated prompt and then suggests alternatives, thereby simplifying the task of modifying and improving the prompt to more accurately capture the user's intent. As the user interacts with the prompt - for example, by selecting or hovering (e.g., with a cursor) over specific words or phrases, the system intelligently detects potential words and phrases for enhancement and presents a list of alternative expressions or terms. The user can then easily select from these suggestions, which are seamlessly integrated into the prompt in real-time. This dynamic interaction not only enriches the prompt with more precise language but also educates the user on how to construct more effective prompts in the future, thus improving the overall quality of the interaction with the LLM. Other aspects and advantages of the various techniques presented herein are set forth in detail below, in connection with the detailed descriptions of the several figures that follow.

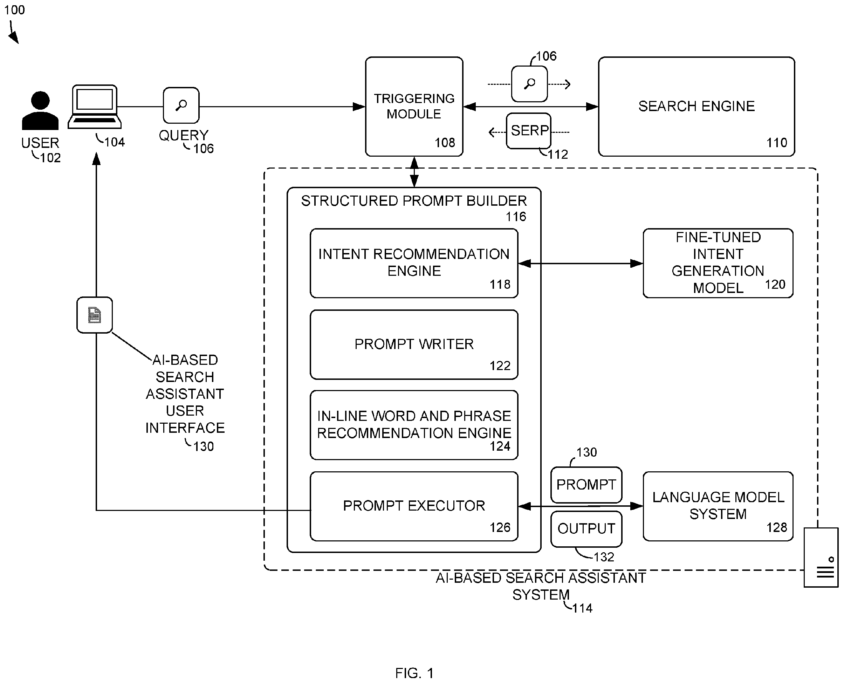

FIG. 1 is a diagram illustrating an example of a computer-based system 100 that includes a structured prompt builder 116 for generating, in an interactive and structured manner, a prompt 130 for use as input to a language model system 128 that is part of an artificial intelligence (AI) search assistant system 114, consistent with some embodiments. Consistent with some embodiments, this AI-based search assistant system 114 serves as an alternative to a conventional search engine 110, offering users a more interactive and refined search experience. When a user 102 initiates a search by submitting a query 106 through a client computing device 104, the system 100 engages in a dual-process approach. Firstly, the query 106 is evaluated by a triggering module 108 to ascertain whether the specific query 106 is one for which the user 102 might benefit from the AI-based search assistant experience. With some embodiments, a decision by the triggering module 108 to activate the AI-based search assistant experience is informed by analyzing the interaction patterns of previous users with a search results page, as generated by a conventional search engine, when those previous users submitted the same or similar queries. Concurrently, the query 106 is also transmitted to a traditional search engine 110, where it undergoes processing to generate a set of search results - referred to herein and shown in FIG. 1 as a search results page (SERP 112).

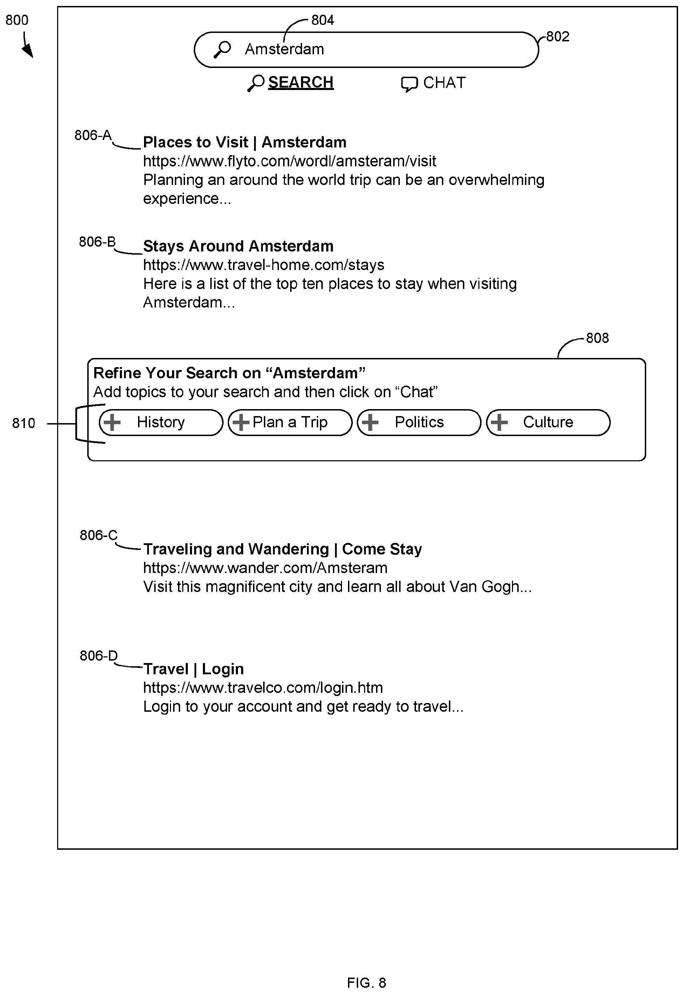

The search engine 110, upon processing the query 106, returns the search results page 112 to the client computing device 104 of the user 102. The search results page typically displays a list of links, snippets, and information relevant to the query 106. However, if the triggering module 108 determines that the AI-based search assistant system 114 should be triggered, the search results page 112 is augmented with a specialized user interface component. This user interface component is associated with the structured prompt builder 116 and is designed to enhance the initial query 106 of the user 102. An example of such a specialized user interface component for the structured prompt builder 116 is depicted in FIG. 8, where the user interface element with reference number 808 represents the specialized user interface component associated with the structured prompt builder 116. This user interface component 808 allows users to interactively select various intent indicators 810, which are then used to build a more detailed and precise prompt for the AI-based search assistant 114, thereby facilitating a more targeted and efficient search experience.

Turning once more to FIG. 1, the structured prompt builder 116 provides users with the ability to refine their search intent. Initially, the intent recommendation engine 118 processes contextual data relating to the user 102, the query 106, and data extracted from the SERP 112 generated by the search engine 110, to generate a prompt (not shown) that is provided as input to the fine-tuned intent generation model 120. Consistent with some embodiments, the intent generation model 120 may be a fine-tuned LLM that processes this intermediate prompt to produce a set of intent indicators relevant to the query 106 of the user 102. With some embodiments, the intent indicators are subsequently processed by the intent recommendation engine 118 to determine their relevance to the query 106, resulting in a ranked list of intent indicators. Furthermore, the intent recommendation engine 118 may further process the ranked list of intent indicators to establish a hierarchical structure of intent indicators, delineating related intents in a manner that guides the user 102 from broad concepts to more specific subtopics. The intent indicators are then visually presented in an intuitive user interface, in some instances as user-selectable pills or buttons, allowing the user 102 to select one or more intent indicators and build a more detailed and precise prompt 130 for use as input to the language model system 128. As the user 102 selects various intent indicators, the prompt writer 122 of the structured prompt builder 116 dynamically constructs and presents to the user 102 a comprehensive prompt 130 that encapsulates the refined search criteria of the user 102.

The user interface for the structured prompt builder 116 is designed to be dynamic, responding in real-time as the user 102 interacts with the intent indicators. For instance, when a user 102 selects a particular intent indicator, the structured prompt builder 116 immediately assesses whether there are related intent indicators that reside one level lower in the hierarchy, representing more specific aspects of the selected intent. If such related intent indicators exist, they are promptly displayed to the user 102. This allows for a seamless and intuitive narrowing of the search focus. The user 102 can thus drill down from a general topic or search intent to more granular subtopics or intents, refining the prompt 130 with each selection. The user interface updates not only to present these additional, more specific intent indicators but also to incorporate them into the evolving prompt 130, ensuring that the refined intent of the user 102 is captured accurately. This dynamic updating fosters an exploratory experience, where the user 102 is guided through a structured intent discovery process, enabling a more targeted and efficient interaction with the AI-based search assistant system 114.

As the user 102 navigates through the selection of intent indicators, the prompt writer 122 iteratively updates the current prompt to reflect the intent indicators selected by the user 102. Consistent with some embodiments, the prompt writer 122 is a pre-trained machine learning model that operates by updating the current prompt with each user interaction. When a user 102 selects an intent indicator, the prompt writer 122 receives as input the initial user query 106, the cumulative set of selected intent indicators, and the current state of the prompt. It then processes this information to generate an updated prompt that integrates the newly selected intent indicator(s), enriching the prompt with additional specificity and relevance. Conversely, if the user 102 deselects an intent indicator, the prompt writer 122 adjusts the prompt accordingly, removing the influence of the deselected indicator to ensure the prompt remains representative of the current search intent of the user 102. This iterative process ensures that the evolving prompt 130 is a true reflection of the user's intent journey, dynamically adapting to include or exclude details as the user refines their search criteria through the structured prompt builder 116.

The in-line word and phrase recommendation engine 124 further enhances the prompt refinement process by analyzing the generated prompt and identifying key words and phrases that could benefit from replacement by alternatives. For these identified elements, the engine 124 creates a list of alternative words and phrases that could potentially offer a more precise expression of the intent of the user 102. When a user 102 engages in manual editing of the prompt and selects or hovers over a word or phrase with their cursor, this list of alternatives is presented in an accessible format, such as a drop-down menu or an in-line suggestion box. This feature empowers the user 102 to efficiently substitute the selected word or phrase with one of the alternatives, thereby fine-tuning the prompt 130 to more accurately reflect their search intent. The in-line word and phrase recommendation engine 124 thus streamlines the process of prompt customization and personalization, making it easier for users to achieve a prompt that is closely aligned with their specific informational needs and preferences.

Once the user 102 has crafted his or her prompt 130 and is content with its composition, the user 102 can initiate the search process by interacting with a designated button or similar control element within the user interface. This action triggers the prompt executor 126, which is responsible for submitting the refined prompt 130 to the language model system 128. The language model system 128, which may operate as a standalone LLM or as part of a RAG-based LLM solution, processes the prompt 130 accordingly. In the case of a RAG-based system, a search service (not shown) may preprocess the prompt 130 to retrieve relevant content that will inform the LLM's response. The output 132, which is the language model's synthesized and contextually informed response to the prompt, is then conveyed back to the user 102 through an appropriate user interface 130. With some embodiments, this interface 130 takes the form of a chat-based interaction, which not only presents the information in a conversational manner but also allows for easy follow-up prompting. This facilitates a dialogue-like experience where the user 102 can continue to refine their queries based on the information provided, ensuring a dynamic and responsive search session.

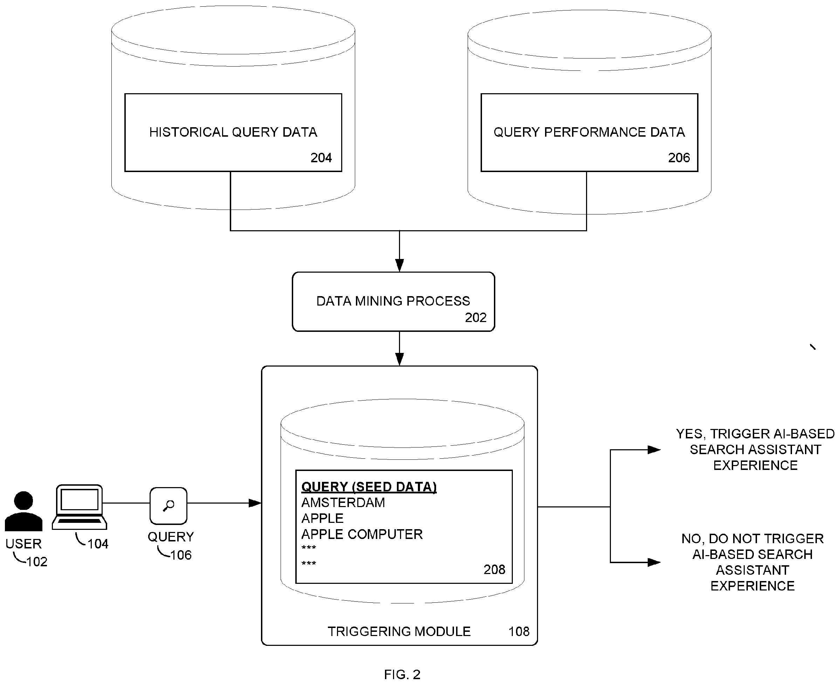

FIG. 2 is a diagram illustrating a detailed view and example of a technique for generating and using a triggering module 108 with a search engine, to trigger an AI-based search assistant experience, consistent with some embodiments. The triggering module 108 is designed to selectively activate an AI-based search assistant experience for specific user queries where the advanced interaction of the AI-based experience is likely to offer a preferred experience over traditional search engine results. The AI-based search assistant experience is tailored to provide users with a more intuitive, conversational, and contextually relevant interaction, which, in many instances, can lead to more precise and comprehensive answers for specific queries. Accordingly, an objective of the triggering module 108 is to provide a preferred experience for user queries where the AI-based system can deliver enhanced interaction, deeper insights, and a more conversational and contextual response than a standard search results page from a conventional search engine.

With some embodiments, the triggering of the AI-based search assistant experience by the triggering module 108 leads to the display of a specialized user interface component within the search results page. An example of this user interface 808 is shown in the example search results page illustrated in FIG. 8. This UI component 808 is designed to facilitate an interactive prompt-building experience, enhancing user engagement and refining the search process. Users are presented with a selection of intent indicators, visually represented as "pills" in some embodiments, which the user can choose from to iteratively build a more detailed and specific prompt for use as input with the AI-based search assistant. Each selected intent indicator corresponds with a specific aspect of the user's intent, allowing for a nuanced and tailored prompt construction. As the user selects these intent indicators, the structured prompt builder 116 dynamically generates a comprehensive prompt that encapsulates the refined search intent of the user. The resulting detailed prompt is then utilized as the input for a language model system 128, which processes the prompt to produce a contextually rich and relevant response, thereby elevating the overall search experience.

The triggering module 108 is developed using a data mining process 202 that leverages historical query data 204 and query performance data 206 to identify specific queries that would benefit from the AI-based search assistant experience. In some examples, historical query data 204 encompasses data records of past user queries, which reveal patterns, trends, and the contextual backdrop against which prior searches were conducted. Query performance data 206, on the other hand, includes metrics indicative of the success rate of queries, based on user interactions with the search results page for a particular query, such as click-through rates, time spent on pages, bounce rates, and the frequency of users refining their queries after initial results.

The data mining process 202 involves analyzing this data to identify queries with a low success rate on the search results page. Indicators of low success include a high bounce rate, indicating that users frequently return to the search results page after clicking on a result, or a high rate of query refinement, suggesting that the initial results did not satisfy the intent of the user. These metrics signal that the needs of the user may not be adequately met by the traditional search results page for a specific query, and an AI-based search experience could potentially provide a more satisfactory outcome.

Additionally, the data mining process 202 aims to identify queries that lead to exploratory user behavior on the search results page. Such behavior is characterized by users engaging with the search results page in a manner that suggests they are in a discovery phase, such as clicking on multiple search results, spending extended time reviewing the content, or navigating through several pages of results. This exploratory interaction may indicate that the user is seeking comprehensive information or trying to understand a broad topic, which is where the AI-based search assistant experience, with its ability to guide and provide in-depth information, becomes particularly valuable.

In operation, the triggering module 108, upon receiving a user query 106, may compare the user query to seed data (e.g., prior user queries) in one of several ways to decide whether to trigger the AI-based search experience. Here, seed data refers to a set of queries 208 known to benefit, or not benefit, from the AI-based experience. One method involves scoring a user query 106 based on its similarity to the queries in the seed data set of queries. If the score exceeds a certain predetermined threshold, the AI-based experience may be triggered. Another approach could be to use machine learning algorithms that predict the likelihood of a query resulting in low success via the search results page or exploratory behavior, based on historical patterns. If the prediction falls within a range indicative of these behaviors, the AI-based experience is then initiated.

Furthermore, the triggering module 108 may employ a real-time analysis of user interaction with the search results page for a given query. If a user's actions match the performance data characteristics of low success or exploratory nature, the AI-based search assistant experience could be triggered dynamically. This real-time decision-making allows for a responsive and user-centric approach to search assistance. User interaction data is collected during the search experience to continuously refine and enhance the performance of the triggering module 108. This collected data encompasses a variety of user actions, such as the frequency and pattern of clicks, the duration of time spent on specific search results, the sequence of queries entered, and any modifications made to those queries. Additionally, the data may also include the frequency with which users opt to use the AI-based search assistant experience for a given query, providing valuable insights into user preferences and the perceived value of the AI-enhanced search functionality. By aggregating and analyzing this rich dataset, the triggering module 108 can be adapted over time, identifying emerging trends and shifts in user behavior. As a result, the triggering module 108 evolves, adjusting its criteria and thresholds for when to activate the AI-based search assistant. This adaptive process ensures that the triggering module 108 remains attuned to the changing needs and preferences of users, maintaining a high degree of relevance and effectiveness in providing search assistance tailored to current user trends and behaviors.

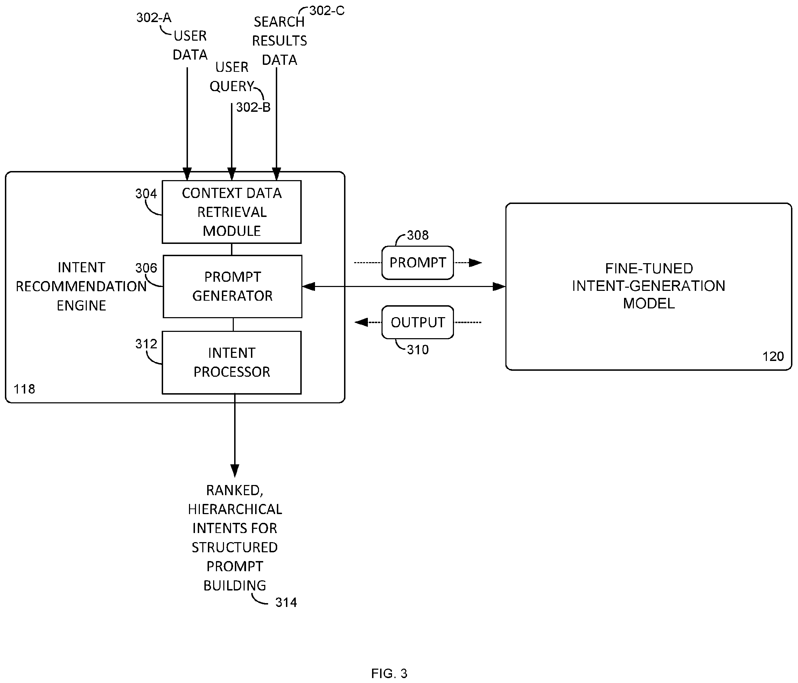

FIG. 3 is a diagram illustrating a detailed view of the intent recommendation engine 118 and the fine-tuned intent generation model 120, which operate together as part of the structured prompt builder 116 to generate a set of ranked and hierarchically organized search intent indicators, consistent with some embodiments. Consistent with some embodiments, the intent recommendation engine 118 and intent generation model 120, as illustrated in FIG. 3, are components or elements of the structured prompt builder 116, designed to generate a set of ranked and hierarchically organized search intent indicators. With some embodiments, the intent generation model 120 may be a fine-tuned LLM that has been specifically tuned or adjusted to process prompts including contextual data related to a user and user query, and the context provided by the search engine results page that resulted from a search engine processing the user query, to generate a set of intent indicators relevant to the user query.

The development of the intent generation model 120 begins with the aggregation of extensive grounding data, which is comprised of multiple instances of historical user queries, and for each query, the query performance data comprising in some instances user interactions undertaken with respect to a search results page associated with the query. This grounding data provides the intent generation model 120 with a foundation of "knowledge," enabling it to accurately discern the users' intents and the diverse contexts in which the queries are made. With some embodiments, the intent generation model 120 is an LLM that is fine-tuned with the grounding data to enhance its ability to generate precise intent indicators of search intent, based on a user query and information extracted from a search results page resulting from the user query. During the fine-tuning phase, the LLM is provided with positive and negative examples of intents for a specific query and search results page (or, data extracted from a search results page). Positive examples are those that align closely with the user's likely intent and are useful for generating engaging and exploratory prompts. Negative examples, on the other hand, include intents that are less relevant or too generic, such as those associated with navigational links like login pages. These examples help the model learn to distinguish between intents that lead to rich, exploratory behavior and those that result in simple navigation.

An optimization metric is employed to fine-tune the model's performance. One such metric is an intent distance score, which represents the distance between a vector or embedding representing an intent from the grounding data and a vector or embedding representing an intent generated by the model. Various distance metrics, such as cosine similarity or Euclidean distance, may be used to calculate this score. The intent distance score helps ensure that the generated intents are semantically close to the positive examples and distinct from the negative examples.

Another optimization metric is the intent order for hierarchy. This metric ensures that the generated intents respect the hierarchical structure specified in the grounding data. The model is trained to produce intents that not only match the user's search context but also follow a logical order from broad to specific, mirroring the hierarchy present in the grounding data.

Consistent with some embodiments, the intent generation model 120 is also tuned to generate intents that are inherently interesting and likely to be associated with exploratory behavior. This is achieved by analyzing user interactions with the search results page for a query, identifying patterns that indicate when users are exploring rather than simply navigating. By focusing on intents that correlate with high user engagement and curiosity, the model 120 is tuned to produce prompts that are more likely to lead to a satisfying and informative search experience.

Accordingly, the intent generation model 120 is one element of the structured prompt builder 116, utilizing advanced machine learning techniques to provide users with intent indicators that are relevant, hierarchically organized, and conducive to exploratory search behavior. Through fine-tuning with grounding data, positive and negative examples, and optimization metrics, the model 120 becomes adept at enhancing the user's search experience by offering intent indicators that lead to prompts that are tailored to their specific needs and search context.

In operation, after the triggering module 108 has activated the AI-based search assistance experience, a sequence of operations is initiated to generate a refined search prompt. The user data 302-A, which identifies the user, along with the user query 302-B and the search results data 302-C, are passed to the context data retrieval module 304 of the intent recommendation engine 118. This module 304 collates and processes the inputs to gather the relevant data necessary for generating a prompt 308 that will be used as input for the intent generation model 120.

With some embodiments, the context data retrieval module 304 utilizes the identity of the user to retrieve a predetermined number of the user's prior searches, focusing particularly on those performed recently. This historical search data is used in disambiguating the current user query. Disambiguation may be achieved through various methods; for instance, by analyzing the frequency and recency of related terms in the user's search history, the system can infer the most relevant meaning of ambiguous terms or phrases in the current query.

Additionally, the search results page (e.g., search results data 302-C) is processed to extract significant text from web pages that are represented by links or hyperlinks within the search results for the user query 302-B. This may involve parsing the titles, headings, and content of the web pages to identify key themes and topics that are pertinent to the user's query 302-B. This information is then synthesized to provide a comprehensive understanding of the context in which the query was made.

With this contextual data in hand, the prompt generator 306 constructs a prompt 308 that includes not only the user's query 302-B and the derived context but also an explicit instruction directing the intent generation model 120 to produce a specified number, or a range, of intent indicators. The prompt 308, thus formulated, is designed to guide the model 120 in generating intents that are closely aligned with the user's potential search objectives.

The output 310 from the intent generation model 120, consisting of various intent indicators, is then processed by the intent processor 312. The task of the intent processor 312 is to ensure that the intent indicators-words or phrases representing individual user intents-are ranked and hierarchically organized. Ranking may be accomplished by evaluating the similarity or distance of each intent indicator from the original user query 302-B. For example, intent indicators that are semantically closer to the user's query may be given higher priority.

Furthermore, the intent indicators may be organized into a hierarchy using clustering algorithms. These algorithms group the indicators into multiple levels based on their semantic relationships, creating a structured tree-like arrangement. The top levels of the hierarchy represent broader intent categories, while subsequent levels provide increasingly specific subcategories. This hierarchical structure enables users to navigate through the intents in a logical and intuitive manner, facilitating the discovery of the most relevant and detailed intent indicators, leading to refined search prompts.

Accordingly, the fine-tuned intent generation model 120 operates at inference time by integrating user-specific data, contextual information from the search results, and explicit instructions to generate intent indicators which are then ranked and hierarchically structured by the intent processor 312, ensuring that the final output 310 is a hierarchically organized set of intent indicators that allow the user 102 to generate and refine a prompt for use as an input to the language model system 128.

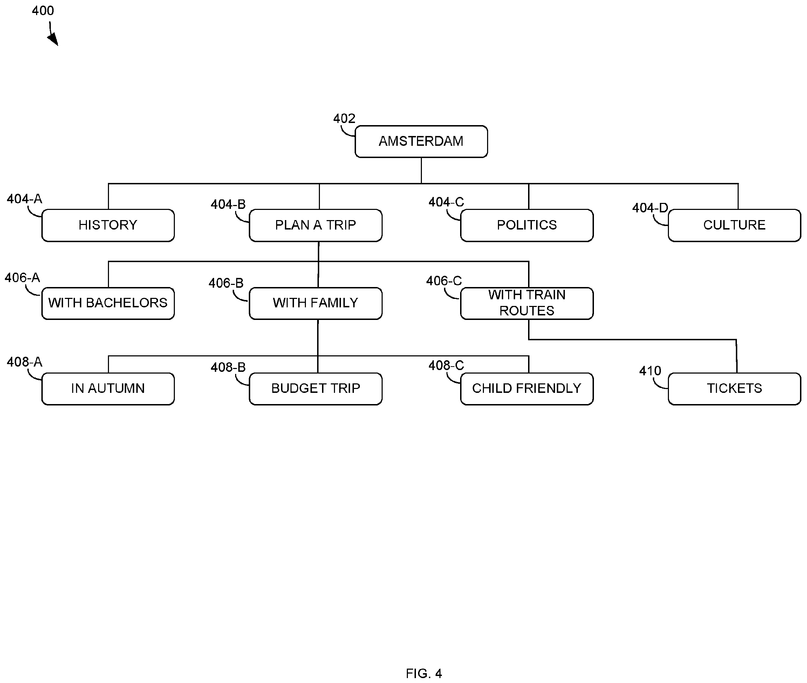

FIG. 4 is a diagram illustrating an example of a set of ranked and hierarchically organized search intent indicators 400, generated by the intent recommendation engine 118 for a user's query 302-B and for use with the structured prompt builder 116, consistent with some embodiments. At the apex of this hierarchy, with reference 402, is the user's initial query, labeled "Amsterdam," which represents the broadest level of search intent. Beneath this top-level query are three levels of increasingly specific intent indicators, organized to guide the user through a refined search process.

The first level of sub-topics or narrower focused intents under the broad concept of "Plan a Trip" 404-B includes indicators such as "With Bachelors" 406-A, "With Family" 406-B, and "With Train Routes" 406-C. These intent indicators represent specific aspects or types of trip planning that a user might be interested in when considering a visit to Amsterdam.

Delving deeper into the hierarchy 400, the second level associated with the parent topic "With Family" 406-B, we find more granular intents such as "In Autumn" 408-A, "Budget Trip" 408-B, and "Child Friendly" 408-C. These intent indicators provide further refinement, allowing users to specify the nature of the family trip they are planning, whether it's a trip tailored for a particular season, one that is cost-conscious, or an experience suitable for children.

At the third level, under the intent "With Train Routes" 406-C, we encounter the intent indicator "Tickets" 410. This intent indicator is even more specific and suggests that the user is interested in obtaining information or making inquiries related to train tickets as part of their travel plans within Amsterdam.

Each level of the hierarchy 400 narrows the focus from the general to the specific, enabling users to incrementally build a detailed and targeted search prompt. The structured arrangement of these intent indicators, as depicted in FIG. 4, exemplifies the system's capability to facilitate users in honing their search to match their precise needs and intentions, ultimately leading to more relevant and satisfactory content from the AI-based search assistant system.

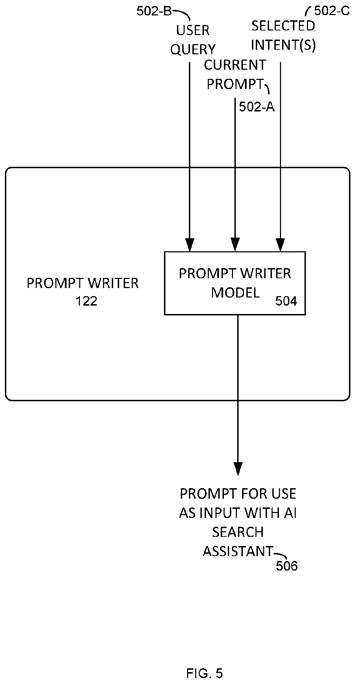

FIG. 5 is a diagram illustrating a detailed view of the prompt writer 122 and a prompt writer model 504, which operate together as part of the structured prompt builder 116 to write a prompt for a user and for use as input to an LLM that is part of an AI-based search assistant, consistent with some embodiments. Consistent with some embodiments, the prompt writer model 504 is a specialized machine learning model that is trained to synthesize user inputs into a coherent prompt that can be effectively processed by an LLM. The training of the prompt writer model 504 involves providing it with a user query 502-B, a current prompt 502-A, and one or more selected intent indicators 502-C. The user query 502-B represents the initial input from the user, which sets the context for the subsequent search. The current prompt 502-A is the evolving search narrative that has been generated based on the user's interactions with the system thus far. The selected intent indicators 502-C are the specific elements chosen by the user that reflect their particular areas of interest or the specific information they seek.

During the training phase, the prompt writer model 504 is exposed to a vast array of such combinations, along with the corresponding output prompts that are deemed suitable for LLM processing. The model 504 learns to recognize patterns and relationships between the inputs and the desired output. It understands how to integrate the essence of the user query 502-B with the nuances brought in by the selected intent indicators 502-C, crafting a prompt 506 that is both grammatically coherent and rich in context. The output prompt 506 generated by the model 504encapsulates the user's expressed intent, ensuring that the LLM receives a well-structured and informative input that can lead to accurate and relevant search results.

One embodiment of the prompt writer model 504 may utilize a Sequence-to-Sequence (Seq2Seq) architecture. This type of model is adept at transforming an input sequence into an output sequence and is particularly well-suited for tasks that involve text generation, such as translating a user's query and intent selections into a coherent and contextually relevant prompt. The Seq2Seq model could be trained on a dataset comprising various user queries and corresponding intent indicators or intent pills, learning to predict the most effective prompt that leads to a satisfactory user interaction with the LLM system.

Another embodiment of the prompt writer model might employ Recurrent Neural Networks (RNNs), which are capable of processing sequences of data with variable lengths. RNNs could be particularly effective in maintaining the context of a conversation or search session, allowing the prompt writer model 504 to generate prompts that are not only relevant to the current query but also reflective of the user's ongoing search journey.

In a further embodiment, the prompt writer model 504 could be based on Transformer models that are not at the scale of LLMs. These models leverage self-attention mechanisms to weigh the importance of different parts of the input data, which could be crucial when integrating multiple intent indicators into a single, coherent prompt. The Transformer-based prompt writer model 504 would be trained to understand the nuances of user queries and intent indicators, generating prompts that are optimized for subsequent processing by an LLM system.

An alternative embodiment might incorporate Conditional Variational Autoencoders (CVAEs). CVAEs are generative models that can produce a range of outputs conditioned on certain inputs. Consistent with this embodiment, the prompt writer model 504 could generate a variety of potential prompts based on the input query and intent indicators, providing a diverse set of options from which the most contextually appropriate prompt could be selected.

A further embodiment could involve a template-based approach, where the prompt writer model 504 uses predefined templates that are dynamically filled in or modified based on the input query and intent indicators. This approach would rely less on generative capabilities and more on a rule-based system, potentially increasing the interpretability and predictability of the generated prompts.

Lastly, the prompt writer model 504 could be a custom hybrid model that combines elements from various machine learning techniques. This hybrid approach could integrate rule-based components with learned features, providing a balance between structured logic and the flexibility of machine learning. The hybrid model could be fine-tuned to generate prompts that are particularly well-suited for eliciting detailed and informative responses from an LLM system.

Each of these embodiments would be designed with the goal of enhancing the user's search and interaction experience, ensuring that the generated prompts lead to accurate, relevant, and comprehensive responses from the language model system. The choice of model would be guided by factors such as the desired level of coherence, the variety of input queries and intent indicators, and the computational efficiency required for real-time user interactions.

In operation, the prompt writer model 504 functions in real-time, updating the prompt iteratively as the user interacts with the structured prompt builder interface. As the user selects an intent indicator 502-C, the model 504 receives this new input and modifies the current prompt 502-A to include the additional context. If the user decides to deselect an intent indicator, the model adjusts the prompt accordingly, removing the specific details associated with that indicator. This iterative process allows for maintaining the relevance and precision of the prompt as the user refines their search intent through interaction with the system.

The prompt writer model 504 operates seamlessly in the background, ensuring that the user's experience is fluid and intuitive. With each selection or deselection of intent indicators, the model 504 quickly processes the changes and presents an updated prompt 506 to the user. This dynamic capability of the prompt writer model 504 allows for an interactive search experience, where the user feels engaged and in control of the search process, with the system responding promptly to their input and guiding them towards a successful prompt and search outcome.

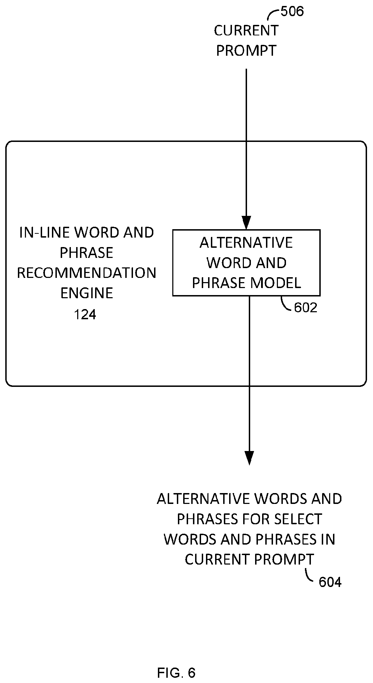

FIG. 6 is a diagram illustrating a detailed view of an in-line word and phrase recommendation engine 124 and corresponding alternative word and phrase model 602, for use in generating suggested alternative words and phrases for use with a prompt for an LLM, consistent with some embodiments. With some embodiments, the in-line word and phrase recommendation engine 124 is designed to enhance the user's ability to refine prompts by offering alternative suggestions for specific words or phrases. The model 602 within the recommendation engine 124 is trained to identify key terms within a prompt 506 that could benefit from alternative expressions. This training involves analyzing a large corpus of text to understand the context in which different words or phrases are used and identifying potential synonyms or related phrases that could serve as replacements or supplements to the original text.

During the training phase, the model 602 learns to recognize patterns of language usage and the semantic relationships between words and phrases. It is provided with examples of prompts where certain words or phrases have been replaced with alternatives, along with the outcomes in terms of the prompt's effectiveness in conveying the intended meaning. Through this process, the model 602 becomes adept at suggesting, for each of several words or phrases in a current prompt 506, a list of alternatives 604 that are contextually appropriate and semantically rich, thereby expanding the user's options for refining their prompt.

In practice, the recommendation engine 124 operates in real-time, actively monitoring the user's interaction with the prompt as presented in the prompt builder user interface 808. When the user selects or hovers over a specific word or phrase within the prompt, the recommendation engine 124 detects this action and triggers the display of a list of alternative words or phrases. This list is generated by the model 602, which takes into account the current context of the prompt and the specific word or phrase in question. The alternatives presented are chosen based on their relevance and potential to enhance the clarity or specificity of the prompt.

For example, if a user has formulated a prompt that includes the phrase, "public transport," the recommendation engine 124, upon recognizing the user's attention to this phrase, may offer a dropdown list of alternatives such as "bike rentals," "walking tours," "private cars," and "boat tours." By choosing one of these alternatives, the user can enhance their prompt to more accurately convey their search intent, for example, opting for "bike rentals" to explore transportation options that are more specific than the broader term "public transport." This functionality of the recommendation engine 124 not only assists users in refining their prompts but also provides insights into the variety of expressions that can improve their engagement with the LLM.

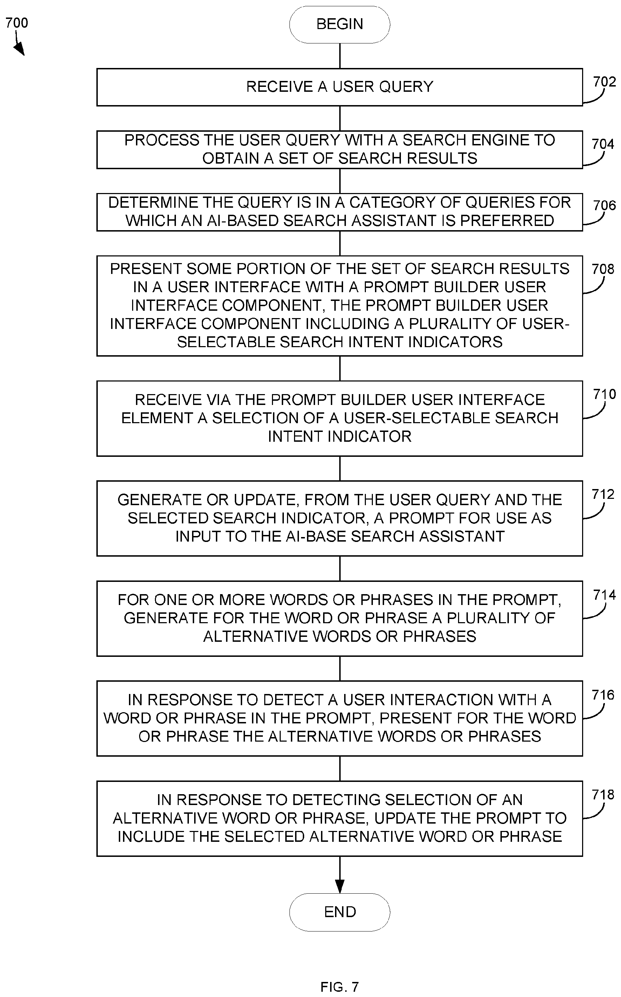

FIG. 7 is a flow diagram illustrating method operations performed as part of a method 700 for generating a prompt, in an interactive manner, using a structured prompt builder, consistent with some embodiments. The method begins with operation 702, where a user query is received. This operation serves as the entry point for the user's interaction with the system, where the user inputs a search term or question that they wish to explore further. The system captures this user query and uses it as the basis for subsequent operations.

Following the reception of the user query, operation 704 involves processing the user query with a search engine to obtain a set of search results. This operation leverages the capabilities of a conventional search engine to gather preliminary data relevant to the user's query. The search engine performs its standard function of parsing the query, searching its databases, and returning a list of documents, links, or snippets of information that are deemed relevant to the query. However, within the context of the inventive system, these search results are not the final output but are used to inform the next steps of the method, enriching the interactive prompt-building process.

At method operation 706, the system then determines if the query falls into a category of queries for which an AI-based search assistant experience is preferred. This determination influences whether the user will be limited to a traditional list of search results or provided an opportunity to engage with the more advanced AI-based search assistant experience. The system assesses the nature of the query, possibly considering factors such as the complexity of the query, the likelihood of the user desiring a conversational interaction, or the potential for the query to benefit from the AI-based search assistant's capabilities. If the query is identified as suitable for the AI-based search assistant, the system proceeds to present, in some instances with the search results generated by the search engine, a special user interface component - the prompt builder user interface component - providing a more interactive search experience to the user. This decision-making process is informed by the system's understanding of user behavior, query patterns, and the overall goal of enhancing user satisfaction with the search process.

Continuing with the method 700, at operation 708, having triggered the AI-based search experience, the system presents a portion of the set of search results in a user interface (e.g., a search results page) with a prompt builder user interface component. This user interface component includes a plurality of top-level user-selectable search intent indicators. In this operation 708, the system dynamically integrates the prompt builder within the user interface for the search results, typically embedding with the search results the prompt builder user interface component. The prompt builder user interface component is designed to be intuitive, allowing users to interact with it seamlessly as part of their search activity. It displays a series of selectable intent indicators, which are visual elements such as pills, buttons, tabs, or links that represent different facets or subtopics related to the user's initial query.

Turning briefly now to FIG. 8, an example user interface 800 is presented, highlighting the integration of the inventive system's capabilities with a conventional search engine layout. At the top of the user interface 800, a search bar 802 is presented - a familiar element where users can enter their queries. In this instance, the user has entered the initial query "Amsterdam" 804, which serves as the starting point for the search experience.

Upon receiving the query, "Amsterdam" 804, the system's triggering module evaluates it and determines that this query may yield more beneficial results if processed using the AI-based search assistant. This decision is based on the nature of the query and comparison with prior queries, which suggests that the user might be seeking an interactive, detailed, and conversational response that goes beyond the standard list of links and documents typically provided by search engines.

As a result of this determination, the prompt builder user interface component 808 is presented to the user, seamlessly embedded within the search results 806-A, 806-B, 806-C, and 806-D. This integration positions the prompt builder user interface 808 as a natural extension of the search process, inviting the user to engage with the system further. The prompt builder user interface 808 is strategically placed among the search results to capture the user's attention and to suggest that a more refined search experience is available.

The prompt builder user interface 808 features a series of top-level intent indicators, such as "History," "Plan a Trip," "Politics," and "Culture," each representing a potential avenue for exploration within the broader context of the Amsterdam query 804. These intent indicators 810 are visually distinct, designed to stand out and draw the user's eye, encouraging interaction. The user can select any of these intent indicators to refine their search, signaling to the system the specific direction they wish to take their inquiry about Amsterdam.

The search results 806-A through 806-D provide a backdrop of traditional search outputs, which may include links to travel guides, historical articles, political analyses, or cultural event listings related to Amsterdam. The juxtaposition of the prompt builder user interface 808 with these search results underscores the enhanced capabilities of the inventive system, offering users a more nuanced and tailored search experience that leverages the power of AI to meet their information needs.

Referring again to FIG. 7 and proceeding with the method 700, at operation 710, the user refines their search, as represented by their initial query ("Amsterdam"), by selecting an intent indicator from the prompt builder user interface 808. For example, when the user selects the "Plan a Trip" intent indicator, the system recognizes this action as an instruction to focus the search experience on travel-related aspects of Amsterdam. The system (e.g., the prompt writer 122) then, at operation 712, generates a prompt based on the user query and the selected intent indicator. If the system had previously generated a prompt, the selection of a subsequent intent indicator would cause the system to update the exiting prompt to reflect the search intent associated with the newly selected intent indicator. Accordingly, the system updates the prompt to reflect the refined search intent, dynamically generating a more targeted query that will be used to solicit detailed and relevant responses from the AI-based search assistant. This operation exemplifies the interactive nature of the prompt builder, allowing the user to seamlessly narrow down the scope of their search to match their specific interests and requirements.

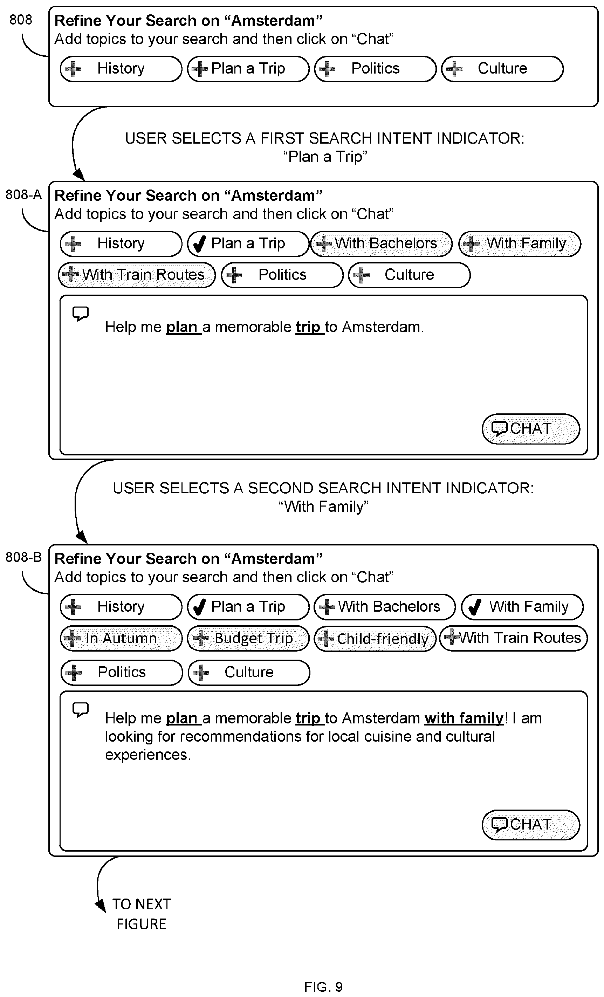

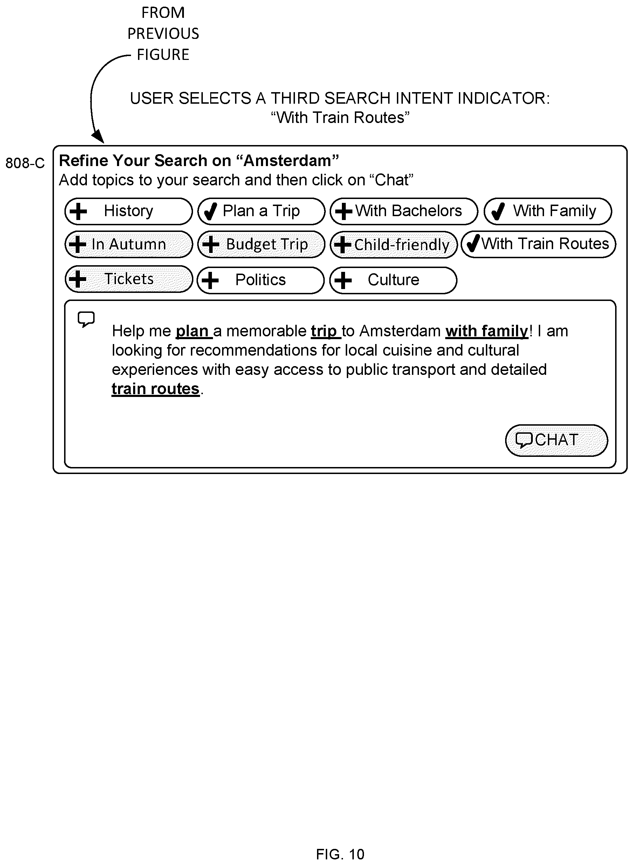

Turning briefly to FIG. 9, the prompt builder user interface 808 is dynamically updated in response to user interaction. As the user selects a first search intent indicator, such as "Plan a Trip," the user interface component reflects this choice by displaying a check mark with the selected intent indicator, as depicted at reference 808-A. This visual cue confirms the user's selection and indicates that the search will now be refined based on this intent. Subsequently, the user interface component presents additional, more focused intent indicators related to the selected top-level intent, offering options like "With Bachelors," "With Family," and "With Train Routes." These new intent indicators provide the user with the opportunity to further specify their search criteria, allowing for a more personalized and relevant answer or response from the language model system.

Concurrent with the selection of the "Plan a Trip" intent indicator, the prompt writer component 122 of the system 100, as shown in FIG. 5, generates an initial prompt intended for use with the LLM of the AI-based search assistant. The generated prompt, "Help me plan a memorable trip to Amsterdam," is crafted to encapsulate the user's travel-related search intent. The words associated with the selected intent indicator may be formatted distinctively, such as through bolding or color change, to emphasize the elements of the query that have been refined by the user's selection. This initial prompt serves as a structured input to the LLM, which is designed to provide the user with comprehensive and contextually relevant information for planning a trip to Amsterdam. The system's ability to dynamically update the prompt in real time, as the user selects various intent indicators, showcases the interactive and adaptive nature of the inventive system, enhancing the overall search experience.

Continuing with the detailed description of the user interfaces illustrated in FIG. 9, the interactive nature of the prompt builder is further exemplified as the user engages with the user interface. When the user makes a subsequent selection of the intent indicator "With Family," as shown in 808-B, the prompt builder interface dynamically updates to reflect this choice, as shown with reference number 808-B. The intent indicator "With Family" is now marked with a checkmark, visually confirming the user's selection and indicating a more specific search direction within the broader travel context.

Following this selection, the user interface component presents additional sub-topics or lower-level intent indicators that are directly related to the chosen "With Family" intent. These new indicators, "In Autumn," "Budget Trip," and "Child-Friendly," appear on the interface 808-B, offering the user further granularity to refine their search. This level of detail allows the user to tailor their query to include considerations such as the time of year, budget constraints, and child-friendly activities, which are particularly relevant when planning a family trip.

Simultaneously, the prompt writer component 122 of the system 100 updates the prompt to incorporate the additional selected intent indicator, "With Family." The prompt now reads, "Help me plan a memorable trip to Amsterdam with family." This updated prompt is a more precise representation of the user's refined search intent and is structured to elicit a more targeted response from the AI-based search assistant's LLM.

As the user interacts with the prompt builder user interface, the interface is dynamically refreshed to display the current selections and available options. The current prompt is continuously updated to reflect the currently selected intent indicators, ensuring that the user's evolving search criteria are captured accurately. This dynamic interaction between the user and the prompt builder interface underscores the system's capacity to adapt to the user's input in real time, creating a responsive and personalized search experience.

Returning to the detailed operations of method 700 illustrated in FIG. 7, the operations of the in-line word and phrase recommendation engine 124 will now be described. The in-line word and phrase recommendation engine 124 enhances the user's ability to refine their search prompts further. At operation 714, the system, upon detecting a user interaction with a word or phrase in the current prompt, activates the in-line word and phrase recommendation engine 124. This engine 124 is designed to present the user with a plurality of alternative words or phrases for the selected word or phrase within the prompt, thereby offering suggestions that could potentially improve the prompt's effectiveness or tailor it more closely to the user's intent.

Moving to operation 716, the system responds to the user's selection of one of these alternative words or phrases by updating the current prompt to display, as user-selectable, one or more alternatives. This operation exemplifies the system's interactive nature, allowing the user to make real-time adjustments to their query based on the suggestions provided by the recommendation engine. The updated prompt is then more reflective of the user's refined search intent and is better positioned to yield relevant results from the AI-based search assistant.

Finally, at operation 718, the method concludes with the updated prompt, now incorporating the user's selections from the in-line word and phrase recommendation engine 124. This prompt, having been dynamically refined through the user's interactions, serves as a structured input to the language model system (including an LLM) of the AI-based search assistant. The LLM processes this input to generate a response that is expected to be more accurate and contextually relevant, given the enhanced specificity and detail of the user's refined prompt. Through these operations, the in-line word and phrase recommendation engine 124 assists users in constructing or crafting precise and informative prompts, thereby improving the overall search experience.

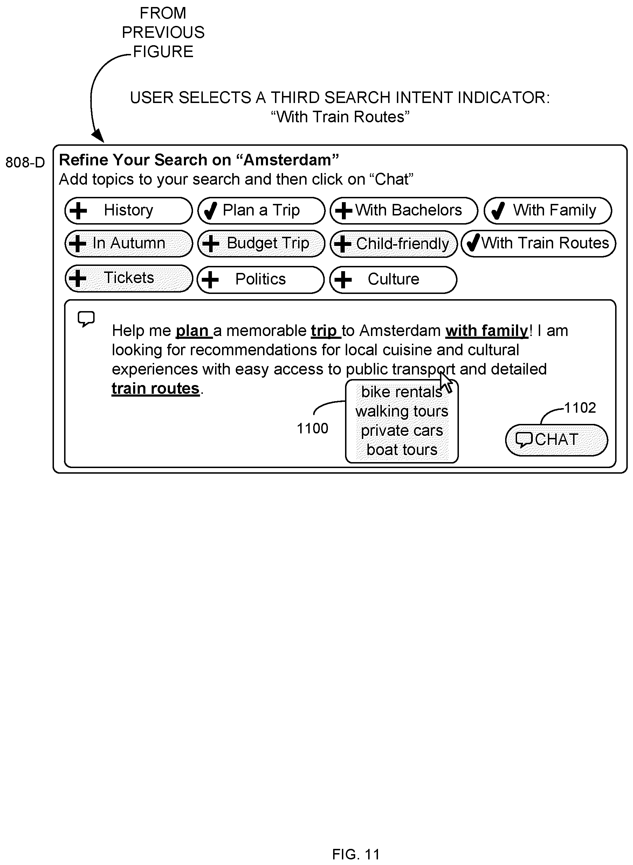

In FIG. 11, user interface 808-D illustrates the operation of the in-line word and phrase recommendation engine 124, which is a key feature designed to enhance the user's ability to refine their search prompts. When the user hovers over or selects the phrase "public transit" within the current prompt, the system activates the recommendation engine 124. This action triggers the display of a dropdown list 1100, which presents several alternative phrases or words that the user might consider as replacements for the selected phrase.

The alternatives provided in the dropdown list 1100 are contextually relevant suggestions that aim to enrich the prompt or better align it with the user's search intent. For instance, the list might include alternatives such as "bike rentals," "walking tours," "private cars" or "boat tours." If the user finds one of these alternatives more suitable, they can select it from the list, and the system will automatically update the prompt by replacing the original phrase "public transit" with the user's selection.

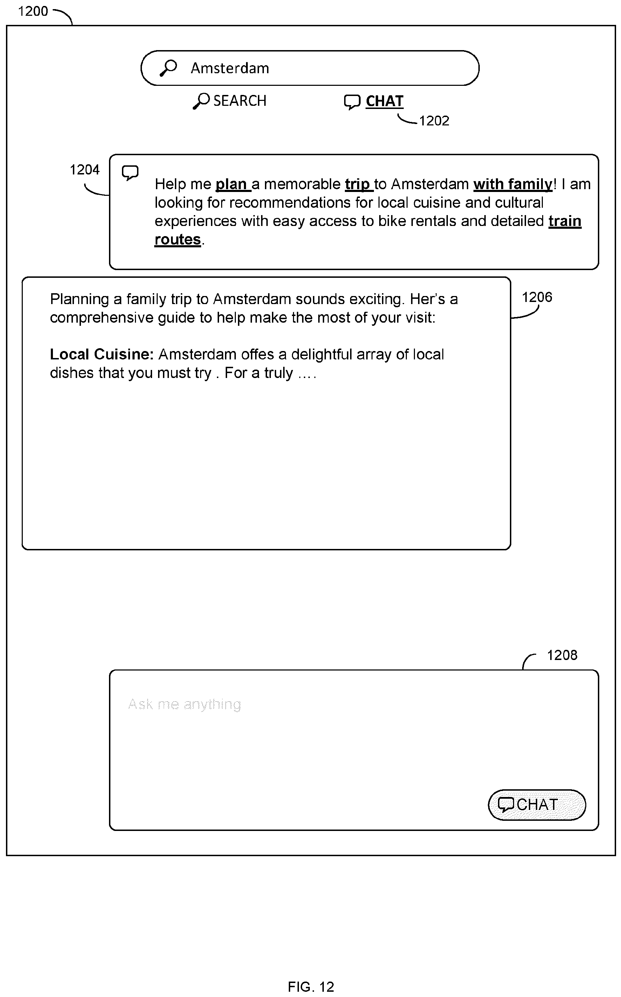

Once the user is satisfied with the modifications to the prompt, they can proceed to select the "CHAT" button 1102. This action signals the system to finalize the prompt and prepare it for submission to the AI-based search assistant. Upon clicking the "CHAT" button 1102, the user interface transitions to the state depicted in FIG. 12, where the system dynamically updates to reflect the user's refined query.

In FIG. 12, the updated user interface is now associated with the chat 1202 experience of the AI-based search assistant, as opposed to the search engine experience. The user interface 1200 showcases the final prompt 1204, now including the user's selected alternatives, ready to be processed by the AI-based search assistant. The user is then presented with a conversational interface where the AI processes the prompt and generates a comprehensive response 1206. The response is a detailed and contextually relevant answer to the user's prompt (and initial query), leveraging the full capabilities of the language model system to provide information that aligns with the user's refined search intent. This seamless transition from prompt refinement to AI interaction underscores the system's interactive and user-centric design, facilitating a more efficient and effective search experience. As shown with reference 1208, a text entry component is shown, allowing the user to enter a follow-up prompt and engage in a chat-like search experience.

### MACHINE AND SOFTWARE ARCHITECTURE

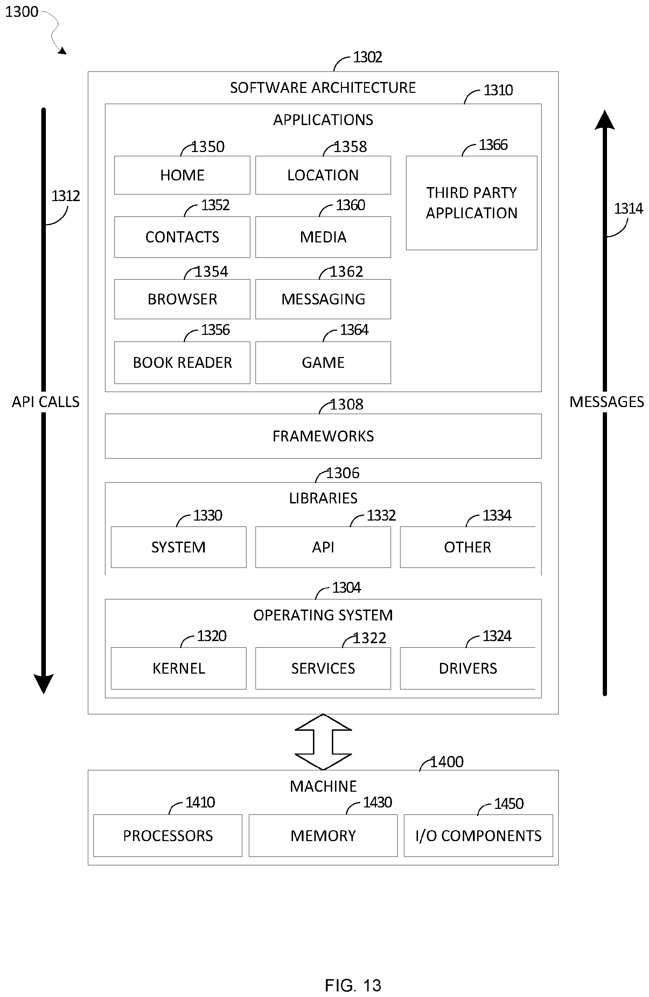

FIG. 12 is a block diagram 1200 illustrating a software architecture 1202, which can be installed on any of a variety of computing devices to perform methods consistent with those described herein. FIG. 12 is merely a non-limiting example of a software architecture, and it will be appreciated that many other architectures can be implemented to facilitate the functionality described herein. In various embodiments, the software architecture 1202 is implemented by hardware such as a machine 1300 of FIG. 13 that includes processors 1310, memory 1330, and input/output (I/O) components 1350. In this example architecture, the software architecture 1202 can be conceptualized as a stack of layers where each layer may provide a particular functionality. For example, the software architecture 1202 includes layers such as an operating system 1204, libraries 1206, frameworks 1208, and applications 1210. Operationally, the applications 1210 invoke API calls 1212 through the software stack and receive messages 1214 in response to the API calls 1212, consistent with some embodiments.

In various embodiments, the operating system 1204 manages hardware resources and provides common services. The operating system 1204 includes, for example, a kernel 1220, services 1222, and drivers 1224. The kernel 1220 acts as an abstraction layer between the hardware and the other software layers, consistent with some embodiments. For example, the kernel 1220 provides memory management, processor management (e.g., scheduling), component management, networking, and security settings, among other functionality. The services 1222 can provide other common services for the other software layers. The drivers 1224 are responsible for controlling or interfacing with the underlying hardware, according to some embodiments. For instance, the drivers 1224 can include display drivers, camera drivers, BLUETOOTH^{®} or BLUETOOTH^{®} Low Energy drivers, flash memory drivers, serial communication drivers (e.g., Universal Serial Bus (USB) drivers), Wi-Fi^{®} drivers, audio drivers, power management drivers, and so forth.

In some embodiments, the libraries 1206 provide a low-level common infrastructure utilized by the applications 1210. The libraries 1206 can include system libraries 1230 (e.g., C standard library) that can provide functions such as memory allocation functions, string manipulation functions, mathematic functions, and the like. In addition, the libraries 1206 can include API libraries 1232 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 1206 can also include a wide variety of other libraries 1234 to provide many other APIs to the applications 1210.

The frameworks 1208 provide a high-level common infrastructure that can be utilized by the applications 1210, according to some embodiments. For example, the frameworks 1208 provide various GUI functions, high-level resource management, high-level location services, and so forth. The frameworks 1208 can provide a broad spectrum of other APIs that can be utilized by the applications 1210, some of which may be specific to a particular operating system 1204 or platform.

In an example embodiment, the applications 1210 include a home application 1250, a contacts application 1252, a browser application 1254, a book reader application 1256, a location application 1258, a media application 1260, a messaging application 1262, a game application 1264, and a broad assortment of other applications, such as a third-party application 1266. According to some embodiments, the applications 1210 are programs that execute functions defined in the programs. Various programming languages can be employed to create one or more of the applications 1210, structured in a variety of manners, such as object-oriented programming languages (e.g., Objective-C, Java, or C++) or procedural programming languages (e.g., C or assembly language). In a specific example, the third-party application 1266 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 1266 can invoke the API calls 1212 provided by the operating system 1204 to facilitate functionality described herein.

FIG. 13 illustrates a diagrammatic representation of a machine 1300 in the form of a computer system within which a set of instructions may be executed for causing the machine to perform any one or more of the methodologies discussed herein, according to an example embodiment. Specifically, FIG. 13 shows a diagrammatic representation of the machine 1300 in the example form of a computer system, within which instructions 1316 (e.g., software, a program, an application, an applet, an app, or other executable code) for causing the machine 1300 to perform any one or more of the methodologies discussed herein may be executed. For example the instructions 1316 may cause the machine 1300 to execute any one of the methods or algorithmic techniques described herein. Additionally, or alternatively, the instructions 1316 may implement any one of the systems described herein. The instructions 1316 transform the general, non-programmed machine 1300 into a particular machine 1300 programmed to carry out the described and illustrated functions in the manner described. In alternative embodiments, the machine 1300 operates as a standalone device or may be coupled (e.g., networked) to other machines. In a networked deployment, the machine 1300 may operate in the capacity of a server machine or a client machine in a server-client network environment, or as a peer machine in a peer-to-peer (or distributed) network environment. The machine 1300 may comprise, but not be limited to, a server computer, a client computer, a PC, a tablet computer, a laptop computer, a netbook, a set-top box (STB), a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 1316, sequentially or otherwise, that specify actions to be taken by the machine 1300. Further, while only a single machine 1300 is illustrated, the term "machine" shall also be taken to include a collection of machines 1300 that individually or jointly execute the instructions 1316 to perform any one or more of the methodologies discussed herein.

The machine 1300 may include processors 1310, memory 1330, and I/O components 1350, which may be configured to communicate with each other such as via a bus 1302. In an example embodiment, the processors 1310 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an ASIC, a Radio-Frequency Integrated Circuit (RFIC), another processor, or any suitable combination thereof) may include, for example, a processor 1312 and a processor 1314 that may execute the instructions 1316. The term "processor" is intended to include multi-core processors that may comprise two or more independent processors (sometimes referred to as "cores") that may execute instructions contemporaneously. Although FIG. 13 shows multiple processors 1310, the machine 1300 may include a single processor with a single core, a single processor with multiple cores (e.g., a multi-core processor), multiple processors with a single core, multiple processors with multiples cores, or any combination thereof.

The memory 1330 may include a main memory 1332, a static memory 1334, and a storage unit 1336, all accessible to the processors 1310 such as via the bus 1302. The main memory 1330, the static memory 1334, and storage unit 1336 store the instructions 1316 embodying any one or more of the methodologies or functions described herein. The instructions 1316 may also reside, completely or partially, within the main memory 1332, within the static memory 1334, within the storage unit 1336, within at least one of the processors 1310 (e.g., within the processor's cache memory), or any suitable combination thereof, during execution thereof by the machine 1300.

The I/O components 1350 may include a wide variety of components to receive input, provide output, produce output, transmit information, exchange information, capture measurements, and so on. The specific I/O components 1350 that are included in a particular machine will depend on the type of machine. For example, portable machines such as mobile phones will likely include a touch input device or other such input mechanisms, while a headless server machine will likely not include such a touch input device. It will be appreciated that the I/O components 1350 may include many other components that are not shown in FIG. 13. The I/O components 1350 are grouped according to functionality merely for simplifying the following discussion and the grouping is in no way limiting. In various example embodiments, the I/O components 1350 may include output components 1352 and input components 1354. The output components 1352 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1354 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 1350 may include biometric components 1356, motion components 1358, environmental components 1360, or position components 1362, among a wide array of other components. For example, the biometric components 1356 may include components to detect expressions (e.g., hand expressions, facial expressions, vocal expressions, body gestures, or eye tracking), measure bio-signals (e.g., blood pressure, heart rate, body temperature, perspiration, or brain waves), identify a person (e.g., voice identification, retinal identification, facial identification, fingerprint identification, or electroencephalogram-based identification), and the like. The motion components 1358 may include acceleration sensor components (e.g., accelerometer), gravitation sensor components, rotation sensor components (e.g., gyroscope), and so forth. The environmental components 1360 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 1362 may include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1350 may include communication components 1364 operable to couple the machine 1300 to a network 1380 or devices 1370 via a coupling 1382 and a coupling 1372, respectively. For example, the communication components 1364 may include a network interface component or another suitable device to interface with the network 1380. In further examples, the communication components 1364 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 1370 may be another machine or any of a wide variety of peripheral devices (e.g., a peripheral device coupled via a USB).

Moreover, the communication components 1364 may detect identifiers or include components operable to detect identifiers. For example, the communication components 1364 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1364, such as location via Internet Protocol (IP) geolocation, location via Wi-Fi^{®} signal triangulation, location via detecting an NFC beacon signal that may indicate a particular location, and so forth.

### EXECUTABLE INSTRUCTIONS AND MACHINE STORAGE MEDIUM

The various memories (i.e., 1330, 1332, 1334, and/or memory of the processor(s) 1310) and/or storage unit 1336 may store one or more sets of instructions and data structures (e.g., software) embodying or utilized by any one or more of the methodologies or functions described herein. These instructions (e.g., the instructions 1316), when executed by processor(s) 1310, cause various operations to implement the disclosed embodiments.

As used herein, the terms "machine-storage medium," "device-storage medium," "computer-storage medium" mean the same thing and may be used interchangeably in this disclosure. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media and/or device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

### TRANSMISSION MEDIUM

In various example embodiments, one or more portions of the network 1380 may be an ad hoc network, an intranet, an extranet, a VPN, a LAN, a WLAN, a WAN, a WWAN, a MAN, the Internet, a portion of the Internet, a portion of the PSTN, a plain old telephone service (POTS) network, a cellular telephone network, a wireless network, a Wi-Fi^{®} network, another type of network, or a combination of two or more such networks. For example, the network 1380 or a portion of the network 1380 may include a wireless or cellular network, and the coupling 1382 may be a Code Division Multiple Access (CDMA) connection, a Global System for Mobile communications (GSM) connection, or another type of cellular or wireless coupling. In this example, the coupling 1382 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long range protocols, or other data transfer technology.

The instructions 1316 may be transmitted or received over the network 1380 using a transmission medium via a network interface device (e.g., a network interface component included in the communication components 1364) and utilizing any one of a number of well-known transfer protocols (e.g., HTTP). Similarly, the instructions 1316 may be transmitted or received using a transmission medium via the coupling 1372 (e.g., a peer-to-peer coupling) to the devices 1370. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 1316 for execution by the machine 1300, and includes digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a matter as to encode information in the signal.

### COMPUTER-READABLE MEDIUM

The terms "machine-readable medium," "computer-readable medium" and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A system for generating a prompt for use with a language model system comprising a first Large Language Model, LLM, the system comprising:
one or more processors;
a memory storage device storing instructions thereon, which, when executed by the one or more processors, cause the system to perform operations comprising:
receiving a query;
receiving a set of search results for the query, the set of search results generated by a search engine;
generating a plurality of intent indicators based on the query and the set of search results;
causing presentation of a user interface (UI) with a prompt builder UI component, the prompt builder UI component presenting, as user-selectable, a subset of the plurality of intent indicators;
detecting a user-selection of at least one intent indicator via the prompt builder UI component;
with a pretrained machine learning model, generating as output the prompt for use with the language model system, using as input to the pretrained machine learning model at least the query and the at least one intent indicator; and
causing presentation of the prompt for use with the language model system via the prompt builder UI component along with a user interface element which, when selected, will cause the prompt to be provided as input to the language model system.

2. The system of claim 1, wherein generating a plurality of intent indicators based on the query and the set of search results further comprises:
extracting contextual data from the set of search results generated by the search engine;
formulating an intermediate prompt that includes the query and the extracted contextual data;
providing the intermediate prompt, as input, to a second LLM;
receiving as output from the second LLM the set of intent indicators relevant to the query and the extracted contextual data;
ranking the set of intent indicators based on their relevance to the query and the extracted contextual data to generate a ranked set of intent indicators; and
organizing the ranked set of intent indicators into a hierarchy, wherein the position of each intent indicator in the hierarchy is based on the degree of specificity of the intent indicator relative to the query and the extracted contextual data, and wherein the subset of the plurality of intent indicators presented in the prompt builder UI component comprises top-level intent indicators in the hierarchy.

3. The system of claim 2, wherein the second LLM is provided by on of the following:
(i) the second LLM is fine-tuned to prioritize generation of intent indicators that are associated with high user engagement and exploratory behavior as determined by analyzing user interaction patterns with the search results page generated by the search engine; or
(ii) the second LLM used in generating the set of intent indicators has been fine-tuned based on an optimization metric that includes an intent distance score representing a distance between a vector representing an intent from grounding data and a vector representing an intent generated by the LLM during fine tuning, wherein the intent distance score is calculated using a distance metric comprising cosine similarity or Euclidean distance.

4. The system of claim 1, wherein, subsequent to causing presentation of the prompt for use with the language model system via the prompt builder UI component, the instructions cause the system to perform additional operations comprising:
causing presentation of additional intent indicators within the prompt builder UI component, the additional intent indicators being hierarchically subordinate to the at least one intent indicator for which a user-selection was previously detected; and
detecting a user-selection of at least one additional intent indicator from the presented additional intent indicators; and
invoking the pretrained machine learning model a second time to generate an updated prompt that incorporates the at least one additional intent indicator.

5. The system of claim 1, wherein the pretrained machine learning model that generates the prompt for use with the language model system is provided by one of the following:
(i) the pretrained machine learning model that generates the prompt for use with the language model system has been trained by:
utilizing a dataset comprising a plurality of training data instances, each instance including a user query, a corresponding set of user-selected intent indicators, and a resulting detailed prompt, wherein the training data is employed to train the pretrained machine learning model to discern patterns and associations between user queries, the selected intent indicators, and the detailed prompts, such that the model learns to generate prompts that are contextually relevant and specific to a query and one or more selected intent indicators; or
(ii) the pretrained machine learning model that generates the prompt for use with the language model system is a Sequence-to-Sequence (Seq2Seq) model, trained to convert an input sequence comprising the user query and the selected intent indicators into an output sequence forming the detailed prompt.

6. The system of claim 1, wherein the memory storage device is storing instructions thereon, which, when executed by the one or more processors, cause the system to perform additional operations comprising:
evaluating the query to ascertain whether to initiate search assistance experience provided by the language model system; and
upon a determination that the search assistance experience is to be initiated, embedding the prompt builder UI component within a search results page that includes the set of search results from the search engine.

7. The system of claim 1, wherein the memory storage device is storing instructions thereon, which, when executed by the one or more processors, cause the system to perform additional operations comprising:
subsequent to presenting the prompt for use with the language model system via the prompt builder UI component:
detecting an interaction with a word or phrase in the prompt for use with the language model system;
in response to detecting the interaction, i) causing presentation of a plurality of user-selectable alternative words or phrases, ii) detecting user-selection of one alternative word or phrase from the plurality of user-selectable alternative words or phrases, and iii) updating the prompt for use with the language model system by replacing the word or phrase for which the interaction was detected with the one word or phrase for which the user-selection was detected.

8. The system of claim 7, wherein the plurality of user-selectable alternative words or phrases are generated by an in-line word and phrase recommendation engine that utilizes a third LLM fine-tuned to suggest contextually relevant synonyms and semantically related expressions based on the content of the prompt and the specific word or phrase for which the interaction was detected.

9. A computer-implemented method for generating a prompt for use with a language model system comprising a first Large Language Model (LLM), the method comprising:
receiving a query;
receiving a set of search results for the query, the set of search results generated by a search engine;
generating a plurality of intent indicators based on the query and the set of search results;
causing presentation of a user interface (UI) with a prompt builder UI component, the prompt builder UI component presenting, as user-selectable, a subset of the plurality of intent indicators;
detecting a user-selection of at least one intent indicator via the prompt builder UI component;
with a pretrained machine learning model, generating as output the prompt for use with the language model system, using as input to the pretrained machine learning model at least the query and the at least one intent indicator; and
causing presentation of the prompt for use with the language model system via the prompt builder UI component along with a user interface element which, when selected, will cause the prompt to be provided as input to the language model system.

10. The method of claim 9, wherein generating a plurality of intent indicators based on the query and the set of search results further comprises:
extracting contextual data from the set of search results generated by the search engine;
formulating an intermediate prompt that includes the query and the extracted contextual data;
providing the intermediate prompt, as input, to a second LLM;
receiving as output from the second LLM the set of intent indicators relevant to the query and the extracted contextual data;
ranking the set of intent indicators based on their relevance to the query and the extracted contextual data to generate a ranked set of intent indicators; and
organizing the ranked set of intent indicators into a hierarchy, wherein the position of each intent indicator in the hierarchy is based on the degree of specificity of the intent indicator relative to the query and the extracted contextual data, and wherein the subset of the plurality of intent indicators presented in the prompt builder UI component comprises top-level intent indicators in the hierarchy.

11. The method of claim 10, wherein the second LLM is provided by on of the following:
(i) the second LLM is fine-tuned to prioritize generation of intent indicators that are associated with high user engagement and exploratory behavior as determined by analyzing user interaction patterns with the search results page generated by the search engine; or
(ii) the second LLM used in generating the set of intent indicators has been fine-tuned based on an optimization metric that includes an intent distance score representing a distance between a vector representing an intent from grounding data and a vector representing an intent generated by the LLM during fine tuning, wherein the intent distance score is calculated using a distance metric comprising cosine similarity or Euclidean distance.

12. The method of claim 9, wherein
(i) subsequent to causing presentation of the prompt for use with the language model system via the prompt builder UI component, the instructions cause the system to perform additional operations comprising:
causing presentation of additional intent indicators within the prompt builder UI component, the additional intent indicators being hierarchically subordinate to the at least one intent indicator for which a user-selection was previously detected; and
detecting a user-selection of at least one additional intent indicator from the presented additional intent indicators; and
invoking the pretrained machine learning model a second time to generate an updated prompt that incorporates the at least one additional intent indicator; or
(ii) the memory storage device is storing instructions thereon, which, when executed by the one or more processors, cause the system to perform additional operations comprising:
evaluating the query to ascertain whether to initiate search assistance experience provided by the language model system; and
upon a determination that the search assistance experience is to be initiated, embedding the prompt builder UI component within a search results page that includes the set of search results from the search engine.

13. The method of claim 9, wherein the pretrained machine learning model that generates the prompt for use with the language model system has been trained by:
utilizing a dataset comprising a plurality of training data instances, each instance including a user query, a corresponding set of user-selected intent indicators, and a resulting detailed prompt, wherein the training data is employed to train the pretrained machine learning model to discern patterns and associations between user queries, the selected intent indicators, and the detailed prompts, such that the model learns to generate prompts that are contextually relevant and specific to a query and one or more selected intent indicators.

14. The method of claim 9, wherein the memory storage device is storing instructions thereon, which, when executed by the one or more processors, cause the system to perform additional operations comprising:
subsequent to presenting the prompt for use with the language model system via the prompt builder UI component:
detecting an interaction with a word or phrase in the prompt for use with the language model system;
in response to detecting the interaction, i) causing presentation of a plurality of user-selectable alternative words or phrases, ii) detecting user-selection of one alternative word or phrase from the plurality of user-selectable alternative words or phrases, and iii) updating the prompt for use with the language model system by replacing the word or phrase for which the interaction was detected with the one word or phrase for which the user-selection was detected;
optionally wherein the plurality of user-selectable alternative words or phrases are generated by an in-line word and phrase recommendation engine that utilizes a third LLM fine-tuned to suggest contextually relevant synonyms and semantically related expressions based on the content of the prompt and the specific word or phrase for which the interaction was detected.

15. A memory storage device storing instructions thereon, which, when executed by the one or more processors, cause the system to perform operations comprising:
receiving a query;
receiving a set of search results for the query, the set of search results generated by a search engine;
generating a plurality of intent indicators based on the query and the set of search results;
causing presentation of a user interface (UI) with a prompt builder UI component, the prompt builder UI component presenting, as user-selectable, a subset of the plurality of intent indicators;
detecting a user-selection of at least one intent indicator via the prompt builder UI component;
with a pretrained machine learning model, generating as output the prompt for use with the language model system, using as input to the pretrained machine learning model at least the query and the at least one intent indicator; and
causing presentation of the prompt for use with the language model system via the prompt builder UI component along with a user interface element which, when selected, will cause the prompt to be provided as input to the language model system.
